Europäisches Patentamt

European Patent Office

Office européen des brevets

(11) Publication number: **0 236 654**
**A1**

(12) **EUROPEAN PATENT APPLICATION**

(21) Application number: 86630043.7

(22) Date of filing: **12.03.86**

(51) Int. Cl.⁴: **A01K 15/00**

(43) Date of publication of application:
**16.09.87 Bulletin 87/38**

(84) Designated Contracting States:
**AT BE CH DE FR GB IT LI LU NL SE**

(71) Applicant: **TRAX PTY. LTD.**
**22 Cameron Street**
**Launceston Tasmania 7250(AU)**

(72) Inventor: **Padgett, Barry Charles**
**Deviot**
**Tasmania 7251(AU).**

(74) Representative: **Weydert, Robert et al**
**OFFICE DENNEMEYER S.à.r.l. P.O. Box 1502**
**L-1015 Luxembourg(LU)**

(54) **Animal handling apparatus.**

(57) Animal handling apparatus in the form of a closed track (26) around which a number of carriages (24) may run. Each carriage (24) has a cradle (46) for supporting an animal on its back, the cradle portion being rotatable relative to the remainder of the carriage (24). Means (18) are provided in turn a standing animal onto its back on a cradle (46), and other means (74) are used to decelerate a moving carriage (24) to deposit a treated sheep back on its feet.

_IIII_ _3_

EP 0 236 654 A1

This invention relates to apparatus for handling animals, and is particularly applicable to the handling of sheep.

It is necessary to periodically perform operations on sheep in order to maintain a healthy flock, or to harvest wool therefrom. There has long been a need for a more automated manner of carrying out drenching, crutching, mulesing, marking and other operations which are desirably carried out at the one time.

Various arrangements for handling sheep in this general manner have been used, but they suffer from many disadvantages, including being too complicated in construction and operation, being generally unsatisfactory, and being less than easily portable.

It is an object of this invention to provide improved animal handling apparatus.

The invention provides animal handling apparatus including a track on which at least one carriage may be mounted for movement between stations along said track, said or each carriage including an animal-receiving portion.

An embodiment of the invention will be described in detail hereinafter with reference to the accompanying drawings, in which:-

Figure 1 is a plan view of the components of one embodiment of sheep handling apparatus according to the invention;

Figure 2 is a side elevation of part of the apparatus in the directionof arrows 2-2 of Figure 1;

Figure 3 is a side elevation of the track and carriage elements of the apparatus in the direction of arrows 3-3 of Figure 1;

Figure 4 is a diagrammatic cross-section along the lines 4-4 of Figure 3;

Figure 5 is a side elevation of a sheep carriage in place on a portion of track;

Figure 6 is a side elevation of a sheep carriage in the sheep discharging position;

Figure 7 is a plan view of the track portion of the apparatus of figure 3;

Figure 8 is a plan view of the track portion of figure 7, shown partially folded;

Figure 9 is another plan view of the track portion of figure 7, fully folded;

Figure 10 is a front elevation of sheep catching box;

Figure 11 is a cross-section along the lines 11-11 of figure 10;

Figure 12 is a cross-section along the lines 12-12 of figure 10;

Figure 13 is a front elevation of a panel for a folding race;

Figure 14 is an end elevation of the panel of figure 13;

Figure 15 is an end elevation of a tightening fork;

Figure 16 is a plan view of linked panels; and

Figure 17 is a side elevation of a race support structure.

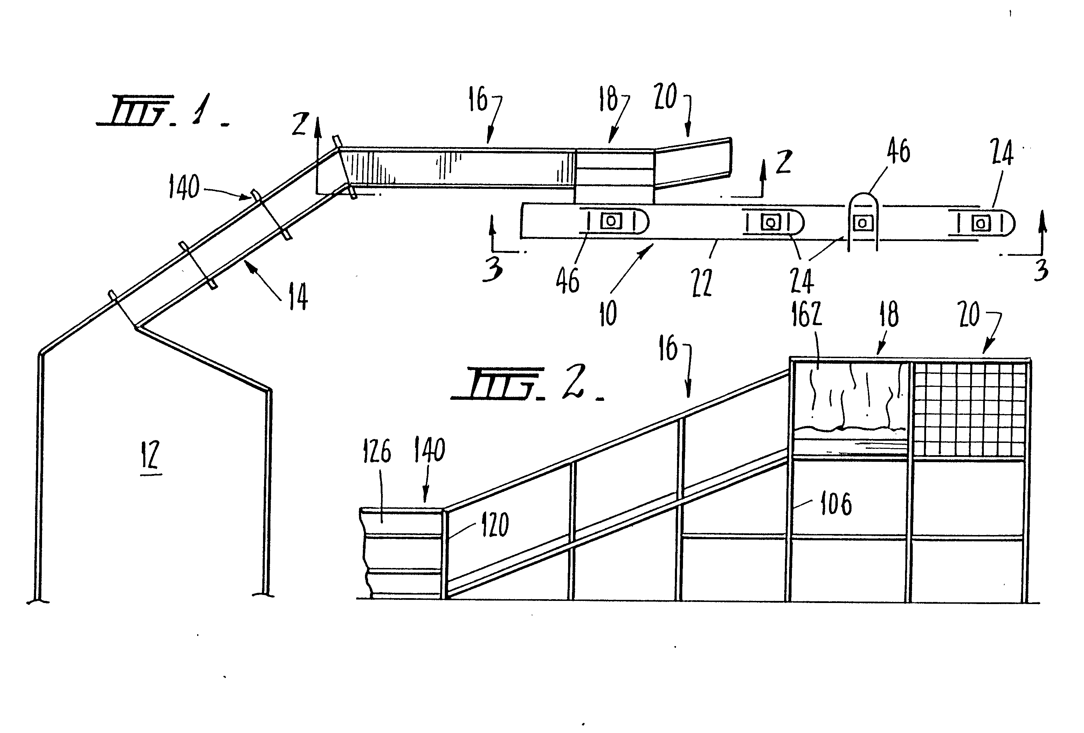

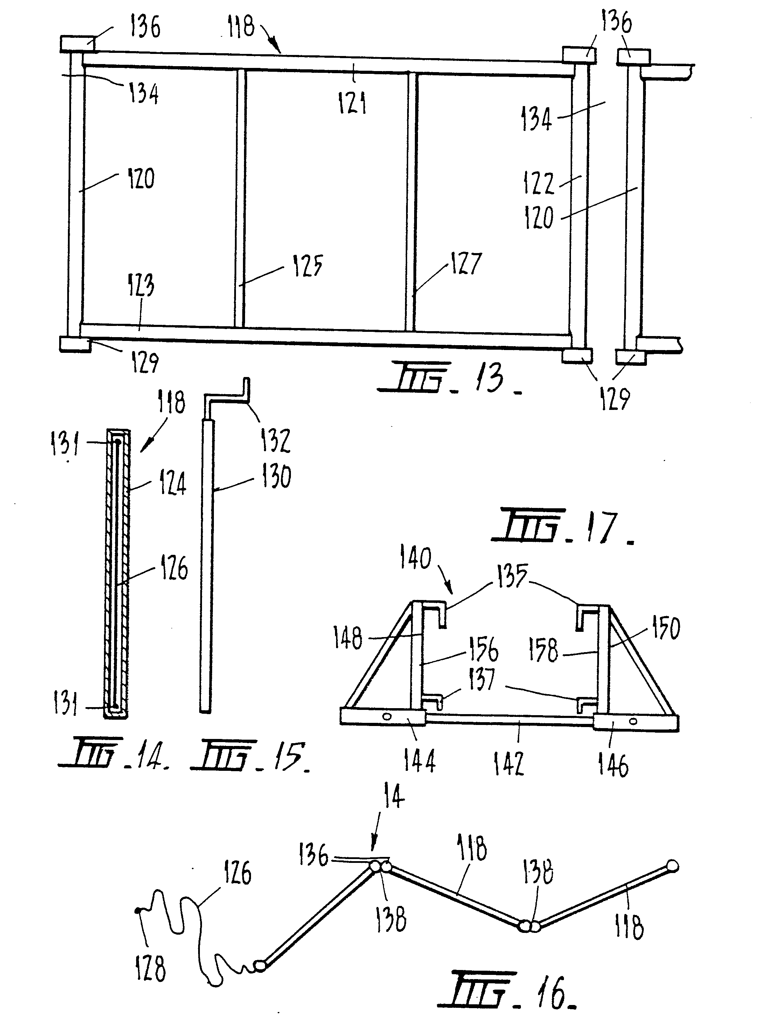

Referring firstly to Figures 1 and 2, the animal handling apparaus 10 is described in the preferred mode that of dealing with sheep, and includes a sheep catching pen 12 (which may be conventional), a race 14 leading therefrom, a folding race suitable there for being described hereinafter in relation to Figures 13 to 17, a ramp 16 leading upwards from ground level, a sheep catching box 18, a decoy pen 20, and a 'sheep train' 22. The train 22 can accommodate a number of carriages 24.

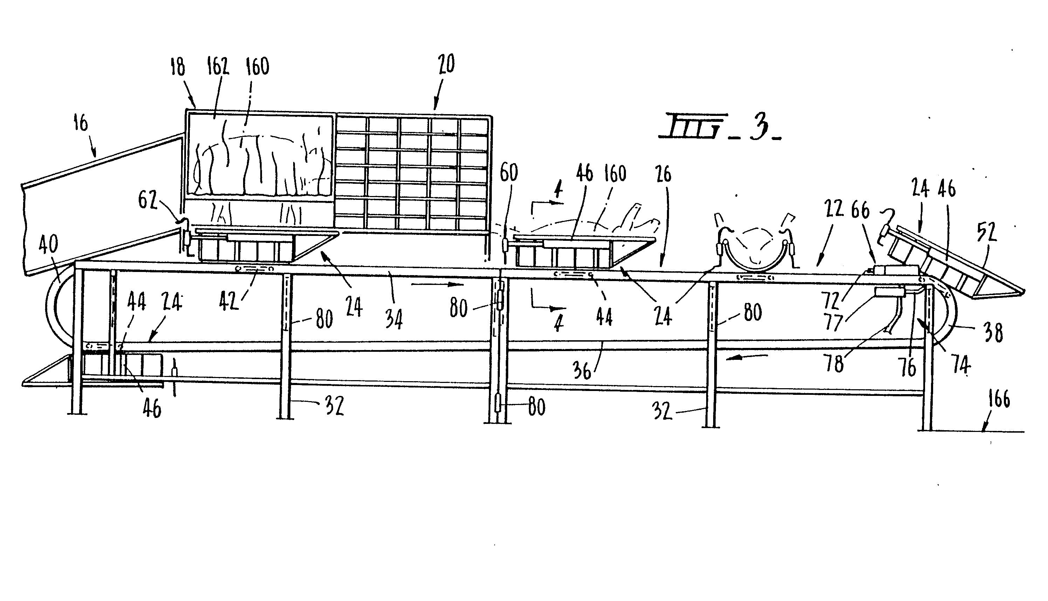

Turning now to Figures 3 to 9, these figures show elements of the 'sheep train' 22. The train 22 consists of an endless track 26, which as seen in Figure 4 consists of two rails 28,30 of U-shaped configuration, arranged with the open ends of the 'U' facing each other. The track is supported from the ground and the separation of the rails 28, 30 is effected by a frame 32, which will be described in somewhat more detail hereinafter with reference to figures 7 to 9.

As can be seen in Figure 3, the track 26 includes a generally horizontal section 34, a sloping lower portion 36, and curved end portions 38,40.

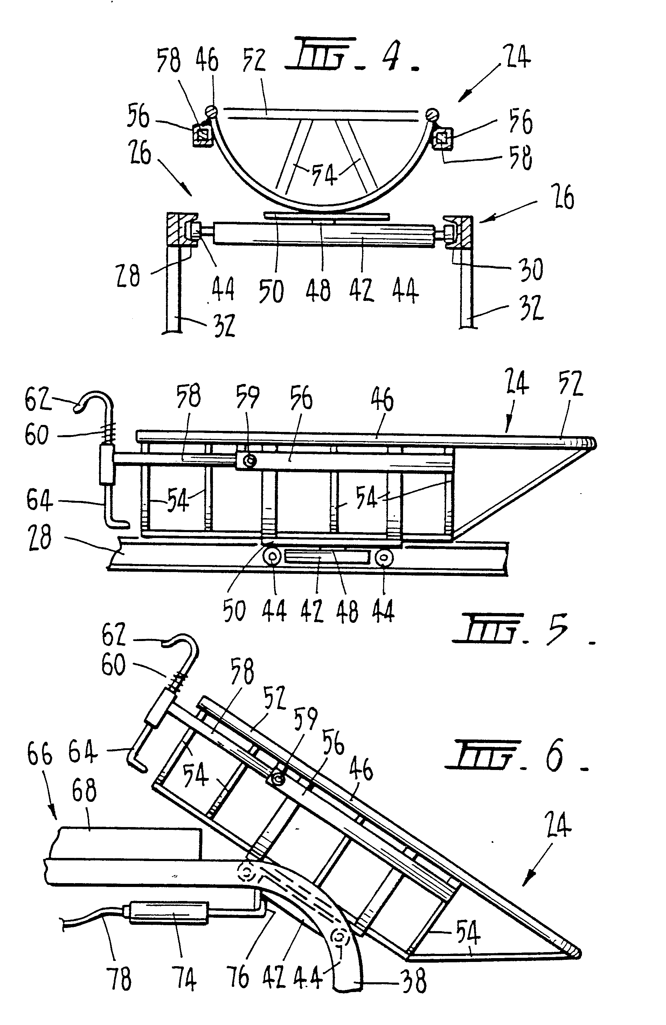

A sheep carriage 24 is shown in more detail in Figures 4 and 5. The carriage includes a base 42 having four wheels 44 arranged to operate as a railway bogie. The cradle 46 is pivotally connected to base 42 at 48. Preferably, the cradle 46 can turn through 360°, and preferably it may be so arranged that it can be located relatively fixedly at predetermined angular positions, such as parallel to the track 26 or at right angles thereto. The cradle consists of a main portion 50 supporting an upper cradle member 52, which in turn supports the other sheep-retaining elements 54 of the cradle, which elements may be steel plate, steel mesh, nylon netting or the like. The main portion 50 also has bars 56 attached thereto, on either side of the cradle, the bars preferably being a telescoping arrangement with a moveable member 58, which can be secured by a nut or the like 59 in any desired position. Each member 58 carries a hock bar 60 which has a hock-engaging portion 62 at its upper end and an actuating portion 64 at its lower end. The bar 60 is adapted to rotate about its main axis, relative to member 58.

Any number of carriages 24 may be located on track 26, for movement around the closed loop of the track. The direction of travel is as shown by the arrows in Figure 1 and 3. At end 38, there is located an automatic hock bar (60) tripping mechanism 66 (Figure 7), which consists of two plate 68,70 located opposite each other, each having a hook-like member 72 protruding therefrom. Located between rails 28, 30 is a carriage arresting device 74 consisting of a spring-loaded hook 76 which is adapted to catch on part of a carriage 24 in order to slow it at the position shown in Figure 5. The hook 76 is connected to an air pump 77 which it operates upon each extension due to contact with a carriage 24, thereby acting as a shock absorber. The pumped air is passed along tube 78 to a pressurised container (not shown) from which the air under pressure can be used, for example, for spraying fluids such as scanning oil as part of sheep treatment. Each carriage may automatically disengage from hook 76 at a particular point, or hook 76 may be manually disengaged.

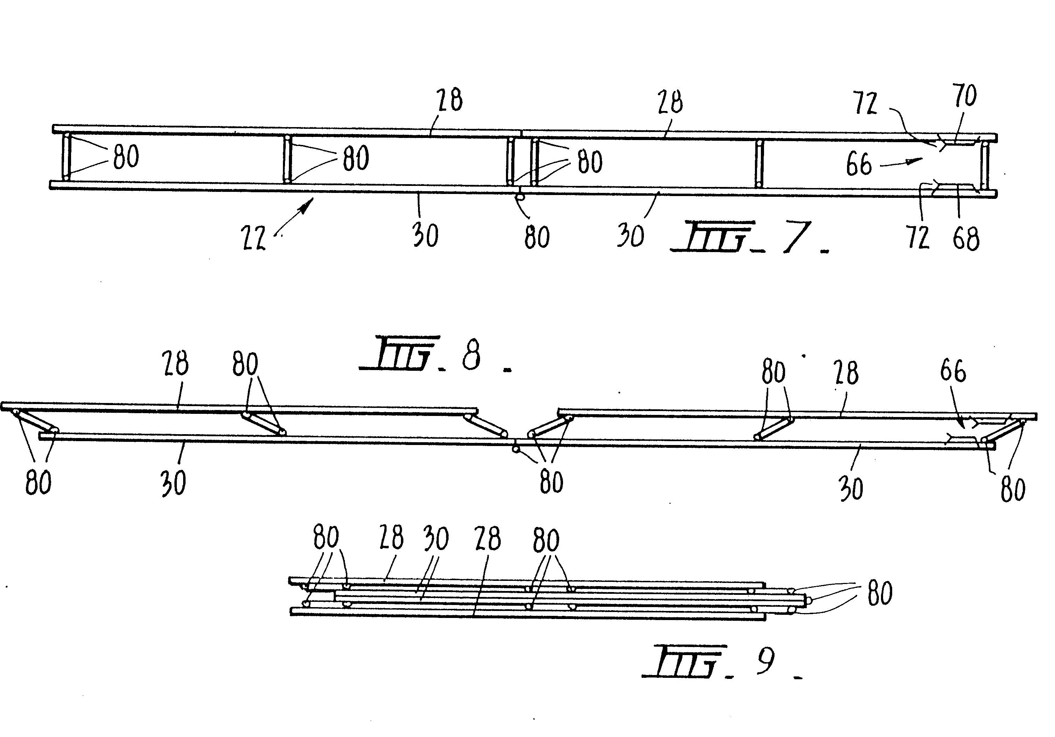

The track 22 may be folded for transportation as shown in Figures 7, 8 and 9. Frame 32 may be hinged at various points 80, and may be held in an assembled position by pins. When the pins are removed (Figure 8) the train can be collapsed, and can also be folded in half (Figure 9). Of course, other ways of hinging the train may be used; a greater length thereof may require more hinging points.

Although the operation of the sheep train 22 will be described in detail hereinafter, it will suffice to say here that it is intended that a raised platform be located next to the track 26, in order for a person to carry out certain tasks in relation to the sheep. In addition, an additional feature, a wool removing tray (not shown) may be provided at one side of the top level of track 22. The tray would receive wool removed as part of a crutching or shearing operation. Carriages 24 would be fitted with 'sweepers' extending laterally therefrom, to push the wool on the tray to a chute at the end thereof, down which the wool would then travel to a container.

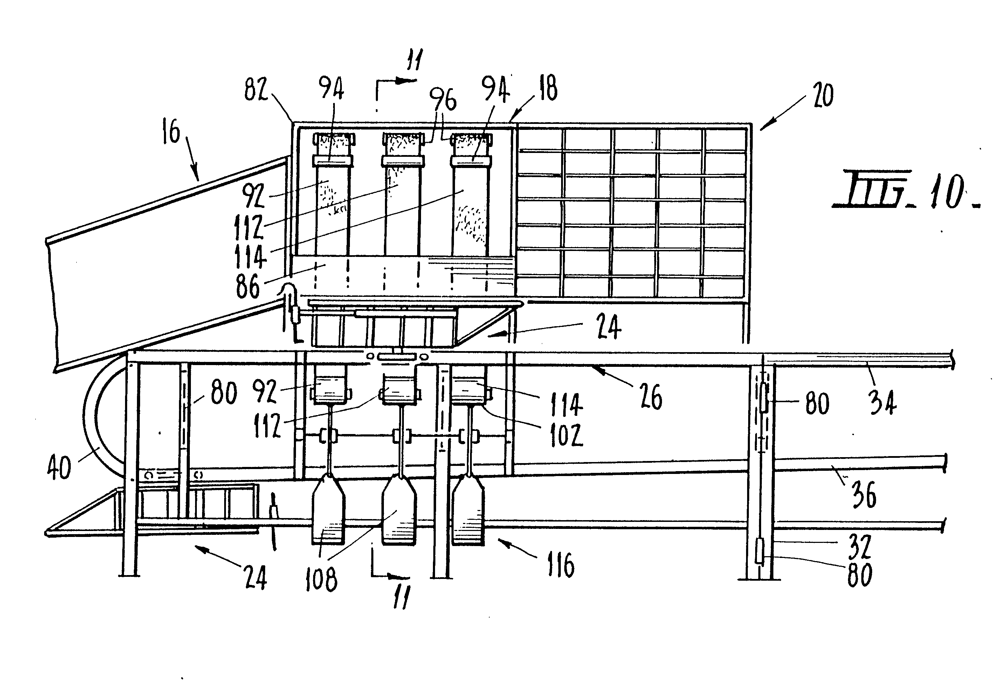

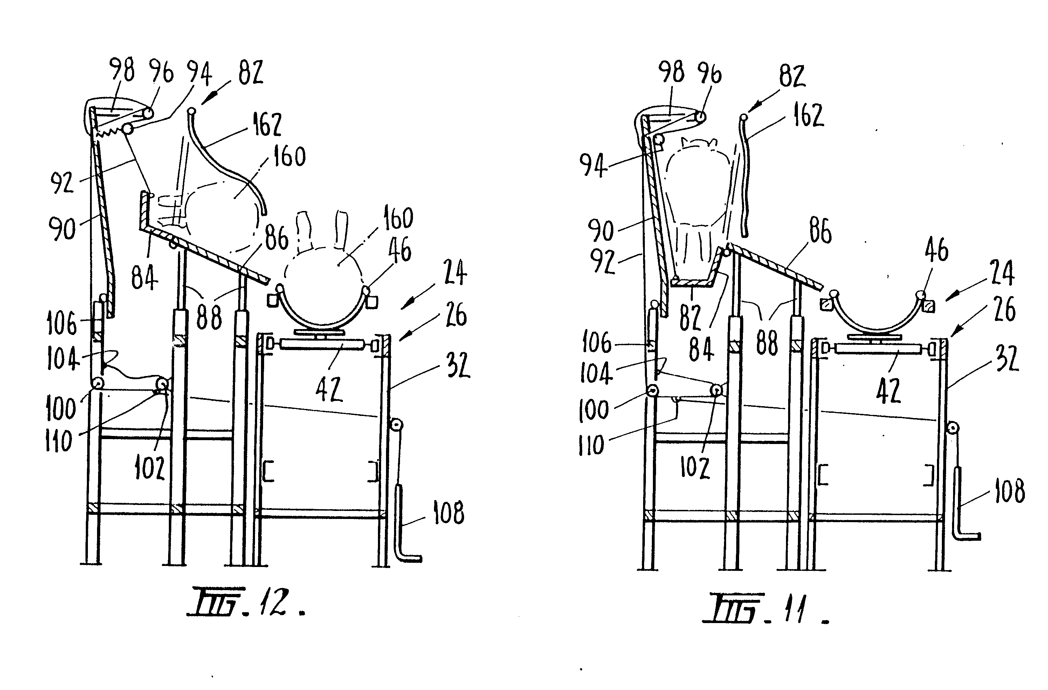

Figures 10 to 12 show a catching box 82 for locating a sheep in a cradle 46. A sheep enters the box 82 from ramp 16, and is shut in the box. The box includes a narrow section of floor 82, and a trip bar 84 and ramp 86 which leads in use to a carriage 24 located in front of box 82. The trip bar 84 and ramp 86 are height adjustable as shown at 88, to cater for different sized of sheep. The box 82 has a hinged back 90, to again allow for some adjustment in accordance with sheep size. Trip bar 8... is pivoted to ramp 86. One end of trip 84 is attached to belt 92 (which may be formed from seat belt webbing or other suitable material), which passes over spring-loaded roller 94, roller 96 - (which extends out from back 90 on arm 98), around back 90, over rollers 100,102 to a point 104 where its other end is attached to frame 106. Foot pedal 108 is connected to belt 92 at 110, so that operation thereof will tighten belt 92. As shown in Figure 10, three belts (and associated equipment) 92,112,114 may be used. Controls 116 could be used (Figure 13) so that operation of one, two or all three belts could be selected. The mechanism for operating the belts could be an hydraulic mechanism, an air-operated mechanism, or any other suitable mechanism, and alternatives to foot pedal control, such as handles or the like, could be used. A curtain 162 may be placed across the front of box 18, so that the sheep cannot see out.

Figure 13 to 17 show a folding race or barrier arrangement. The race or barrier includes a plurality of panels 118 (Figure 13) the posts 120, 122 of which have aperture 124 therethrough, through which a sheet of suitable fabric of material 126, (for example, formed from PVC) can be threaded, through a succession of frames 118 to join them together. One end of the material 126 may be provided with a stop device 128 (Figure 16) such as a rope sewn therein, to prevent the material being drawn through the panels 118. At the other end a fork device 103 with an integral handle 132 can be placed over the material. The handle 132 can then be rotated to wind the material onto the fork, to tighten the race arrangement 14.

Each panel 118 has, apart from posts 120, 122, top and bottom members 121, 123 respectively, and pairs of vertical members 125, 127 which act to prevent billowing of the sheet 126.

Posts 120, 122 are provided top and bottom with cylindrical members 136,129 which act to provide contact surfaces for adjacent panels 118. The other surfaces of members 136,129 are at least roughened, and may be in the form of gear wheels, to enable meshing of contacting members. This tends to prevent adjacent panels 118, having been placed at an angle to each other, forming corners 138 (Figure 16) straightening out under the influence of the tension in material 126. An alternative connection means for adjacent panels 118 is a rope secured to one end and a cam cleat at the other.

Panels 118 may be provided with anti-backing devices (in the nature of spring loaded bars or the like) which allow movement of animals in one direction only, when panel 118 are being used as a race.

Sheet 126 has a rope 131 top and bottom - (Figure 14), sewn into the sheet or otherwise secured thereto.

Figure 17 shows a frame 140 capable of being used as a brace for the race 14. The frame 140 includes a base member 142 which is slidably received within lower members 144,146 of triangular structures 148,150 respectively. Wing nuts, grub screws or the like 152,154 hold the structures 148,150 in place on member 142 at desired locations. The frame is attached to the race 14, by being hooked on to panels 118. Upper hooks 135 are adapted to be hooked onto members 121, and lower hooks 137 are adapted to be hooked over lower members 123, trapping the members between hooks 137 and member 142, which may be staked to the ground. Alternatively the upright members 156,158 could be hollow like posts 120,122 of panel 48, and the material 126 could pass through those members also. Alternatively, the frames 140 could be dispensed with and the parallel race side could be attached so that they were braced, for example by connecting opposed panels 118. When not in use, for race 14 could be folded up, with the panels 118 stacked, the cloth/PVC material acting as a hinge.

The sheep handling apparatus 10 operates as follows.

Sheep are placed in pen 12 in a conventional manner. They are led from pen 12 along race 14, which has been erected conventionally, or as described hereinbefore. The sheep are individually led up ramp 16 to catching box 18. A sheep is normally kept in decoy pen 20 to attract and/or reassure a sheep being led into catching box 18.

The catching box 18 operates to position a sheep 160 on its back in a cradle 46. When the sheep is in the box, and a carriage 24 positioned opposite the front thereof, the operator operates the appropriate control; if the sheep is forward in the box, the operator may only operate belt 114. If the sheep 160 is centrally located, belt 112, belts 92 and 114, or all three belts may be operated. With operation, the selected belt is tightened, between pulley 96 and the connection point between the belt and trip bar 84. This exerts pressure on the flank of sheep 160. Ultimately, the sheep is tipped over by the belt-tightening, overbalancing because its legs abut the top of ramp 86. The sheep slides on its side down ramp 86 and lands in cradle 46. Spring-loaded pulley 94 is attached to a spring 164, which draws the pulley to the back 90 of the box when the controls are released.

The carriage 24 will have been positioned such that the head of the sheep 160 will be on the right in the view of Fig. 5. Hock bars 60 will be turned inwards, so that the sheep's legs can be located in portion 62. It is well known that sheep are docile in such a position, and it is now only necessary to move carriage 24 along track 26, carrying out the desired operation or operations, sequentially if desired, in a 'production line' system. At the catching box 18, a further carriage will be positioned, and a further sheep led in and processed.

It should be mentioned here that sheep may be shorn whilst in the cradle 46. The sides of cradle 46 could be hinged so that they open outwards. A mechanism could be provided which would allow the nearside (or far-side) of the cradle to drop away, to give access to one flank of the sheep for shearing. After the one side of the sheep has been shorn, the side could be pivoted back into place, the cradle 46 rotated through 180°, the now nearside dropped, and the other flank of the animal shorn. The rest of the animal could be shorn while it lies on its back. Many specific ways of pivoting parts of cradle 46 for shearing could be carried out.

When an individual sheep has been completely processed, its carriage 24 will be sent in the direction of the top arrow in Figure 3 towards end 38, for liberation of the animal at area 166. There are inbuilt safeguards to prevent injury to the animal. The first, tripping mechanism 66, operates to catch actuating portions 64 with plates 68,70 to turn them through 90° (this being guaranteed by passing portions 64 between members 72 and the respective plates 68,70 to ensure the 90° orientation) to free the legs of the sheep. Secondly, carriage 24 is stopped at the position shown in Figure 6, by arresting device 74 operating to engage hook 76 with a portion of the base 42 of cradle 46. Acting as a shock absorber, the hook 76 will gently cause the carriage 24 to decelerate. The sheep will fall gently to its feet on area 166. The carriage 24 will then automatically disengage; or when the operator sees the sheep released, or sees the empty cradle, be will manually disengage the hook 76, which will allow carriage 24 to roll over end 38 and down section 36 in the direction of the lower arrow in Figure 3, so that it comes to rest at end 40, ready to be pulled around end 40 to again be located at the front of catching box 18.

It can be seen that this invention is a clear improvement over previous animal handling apparatus. Clearly, with modifications, the embodiment could be used for handling other types of animals.

## Claims

1. Animal handling apparatus characterized by a track (26) on which at least one carriage (24) may be mounted for movement between stations along said track (26), said or each carriage (24) including an animal-receiving portion (46).

2. Animal handling apparatus according to claim 1, characterized in that said track (26) is arranged in a closed loop.

3. Animal handling apparatus according to claim 2, characterized in that said loop is arranged in a substantially vertical plane.

4. Animal handling apparatus according to any preceding claim, characterized in that said or each carriage (24) has a rotatable animal cradle (46) thereon.

5. Animal handling apparatus according to claim 4, including means (18) locating an animal onto said cradle (46).

6. Animal handling apparatus according to any preceding claim, including means (74) to decelerate said or each carriage (24) to cause the safe ejection of an animal therefrom.

7. Animal handling apparatus according to any preceding claim, characterized in that said track - (24) is foldable.

8. Animal handling apparatus according to any preceding claim, characterized in that a foldable race (14) is used to introduce sheep to the means - (18) for locating an animal in a cradle (46).

9. Apparatus for locating an animal, characterized by means (18) to move an animal in an upright position laterally to pivot it about approximately 180°, without gripping the animal in any way.

10. A barrier for use in restraining or channelling the movement of animals, including a plurality of substantially rigid panels (118), and flexible sheet-like material (126) adapted to pass through at least a part of each said panel (118).

_FIG. 1._

_FIG. 2._

0 236 654

FIG_3_

FIG. 4.

FIG. 5.

FIG. 6.

_FIG_ 7 _

_FIG_ 8 _

_FIG_ 9 _

FIG. 10.

0 236 654

_FIG. 12._

_FIG. 11._

0 236 654

FIG. 13.

FIG. 14.  FIG. 15.

FIG. 16.

FIG. 17.

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 953 363 (GEARY)  * Whole document * | 1,2,5, 6,9,10 | A 01 K 15/00 |
| X | GB-A-1 535 857 (PAYNE)  * Whole document * | 1,2,5, 9 | |
| X | GB-A-2 068 036 (BERSEY)  * Whole document * | 10 | |
| Y | | 8 | |
| Y | FR-A-2 565 779 (MARCHAND)  * Claims 1,5,9,10; figures 1,2 * | 8 | |
| A | AU-B- 85 841 (TUNSEY)(1975)  * Whole document * | 1,2,5 | TECHNICAL FIELDS SEARCHED (Int. Cl.4)  A 01 K A 22 B B 65 G |
| A | FR-A-2 320 245 (MARTIGNY)  * Claims 1,3,6; figures 1,3 * | 2,3,6 | |
| A | FR-A-2 116 222 (BODET)  * Claim 1; figure 1 * | 2,3 | |
| A | EP-A-0 127 973 (AL-SAADI)  * Abstract; claim 1; figures 1,3 * | 4 | |
| | --- -/- | | |

The present search report has been drawn up for all claims

| Place of search | Date of completion of the search | Examiner |
|---|---|---|
| THE HAGUE | 11-11-1986 | VON ARX V.U. |

EPO Form 1503 03.82

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| A | AU-B- 37 007 (VAN DIEMAN'S LAND CO.)(1978) <br> * Claim 1; figures 1-3 * <br><br> --- | 5,9 | |
| A | US-A-3 970 045 (GRAHAM) <br> * Whole document * <br><br> ----- | 8,10 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 11-11-1986 | VON ARX V.U. |